# EUROPÄISCHE PATENTANMELDUNG

(11) **EP 2 366 840 A1**
(43) Veröffentlichungstag der Anmeldung: **21.09.2011**
(21) Anmeldenummer: 11152164.7
(22) Anmeldetag: 26.01.2011
(51) Int. Cl.: E04B 1/80, F16L 59/065, E06B 3/677

(54) **Wärmedämmsystem, vorzugsweise für Gebäude**

(30) Priorität: 06.03.2010 DE 102010010493
(71) Anmelder: VACU-ISOTEC KG, 01454 Radeberg (DE)
(72) Erfinder: Ledermüller, Dirk, 01109 Dresden (DE)
(74) Vertreter: Kaufmann, Sigfrid

(57) **Zusammenfassung**

Bekannte Wärmedämmsystem mit Vakuum-Isolations-Paneelen (1), die der Sonneneinstrahlung ausgesetzt sind, können ihre Dämmwirkung in Folge Versagens des Vakuum-Isolations-Paneels (1) (Luftziehen) ihre Dämmwirkung verlieren. Die Erfindung beschreibt ein Wärmedämmsystem vorzugsweise für Gebäude, das aus zwei Glasscheiben (3) besteht, zwischen denen sich ein Vakuum-Isolations-Paneel (1) befindet, wobei die Glasscheiben (3) durch einen im Randbereich der Glasscheiben (3) umlaufenden Abstandshalter (4) auf Distanz gehalten werden, der mit den Scheiben (3) kraftschlüssig verbunden ist. Zumindest eine der Glasscheiben (3) ist durch ein flächiges Gebilde, ausgeführt als Gewebe, Vliesgewebe, Vlies, Gewirk, Folie oder dergleichen, von dem Vakuum-Isolations-Paneel (1) mechanisch beabstandet und thermisch entkoppelt. - Fig. -

## Beschreibung

Die Erfindung betrifft ein in Stapelbauweise hergestelltes Wärmedämmsystem, bevorzugt für Gebäude mit Glasfassaden, das aus zwei Glasscheiben besteht, zwischen denen sich ein Vakuum-Isolations-Paneel befindet. Das Wärmedämmsystem bietet sich insbesondere für die Verwendung als hochwärmeisolierendes Bauelement im Brüstungsbereich in Glasfassaden, aber auch für Zwischenwände und Wände für Kühl- oder Klimaräume an.

Vakuum-Isolations-Paneele beinhaltende Wärmedämmsysteme sind in vielfältiger Form aus dem Stand der Technik bekannt.

In DE 433 94 35 C2 ist ein Mehrscheibenpaneel als thermisch isolierendes Bauelement beschrieben. Das Paneel besteht aus zwei Scheiben, zwischen denen sich ein plattenförmiger isolierender Formkörper ― ein Vakuum-Isolations-Paneel (VIP) ― befindet. Der Formkörper besteht aus einer von einer gas- und wasserdichten Hülle umgebenen und evakuierten pulver- oder faserhaltigen Dämmplatte. Der Zwischenraum im Bereich der Ränder der Glasscheiben ist von einem gasdichten Randverbund ausgefüllt.

Das beschriebene Mehrscheibenpaneel hat jedoch den Nachteil, dass die gas- und wasserdichte Hülle des evakuierten Formkörpers, die üblicherweise aus Kunststoff gefertigt ist, in direkten Kontakt mit den Glasscheiben steht. Wird ein solches Mehrscheibenpaneel an einer Gebäudefront verbaut, die der direkten Sonneneinstrahlung ausgesetzt ist, so erhitzt sich die der Sonne zugewandte Glasscheibe im Sommer auf Temperaturen, die jenseits der 60°C liegen können; im Winter kann die Temperatur der Glasscheibe dagegen bei unter -20°C liegen.

Diesem enormen Temperaturunterschied ist nicht nur die Glasscheibe ausgesetzt, sondern auch die Kunststoffhülle des Vakuum-Isolations-Paneels, die in direkten Kontakt mit der Glasscheibe steht. Diese Temperaturschwankungen lassen den Kunststoff überdurchschnittlich schnell altern, wodurch dieser spröde und in Folge dessen undicht wird; das Vakuum-Isolations-Paneel zieht Luft und verliert damit seine thermische Isolationswirkung. Es kann jedoch auch vorkommen, dass die Kunststofffolie bei besonders hohen Temperaturen im Sommer schmilzt, was ebenfalls die beschriebene Wirkung zur Folge hat.

Aufgabe der Erfindung ist es, ein Vakuum-Isolations-Paneel beinhaltendes Wärmedämmsystem mit Außenflächen aus Glas bereitzustellen, das im Vergleich zu bekannten Wärmedämmsystemen eine erhöhte Alterungsbeständigkeit besitzt und seine Dämmwirkung dauerhaft behält.

Gelöst wird die Aufgabe durch die Merkmale des unabhängigen Patentanspruchs 1; vorteilhafte Ausgestaltungen der Erfindung sind den Unteransprüchen zu entnehmen.

Nach Maßgabe der Erfindung besteht das Wärmedämmsystem für Gebäude aus zwei Glasscheiben, zwischen denen sich ein Vakuum-Isolations-Paneel befindet, wobei die Glasscheiben durch einen im Randbereich der Glasscheiben umlaufenden Abstandshalter auf Distanz gehalten werden, der mit den Scheiben kraftschlüssig verbunden ist. Darüber hinaus ist zumindest eine der Glasscheiben durch ein flächiges Gebilde, ausgeführt als Gewebe, Vliesgewebe, Vlies, Gewirk, Folie oder dergleichen, von dem Vakuum-Isolations-Paneel mechanisch beabstandet und thermisch entkoppelt.

Bevorzugt beinhaltet das flächige Gebilde Glasfasern oder Kohlefasern oder Steinwolle als wesentlichen Bestandteil. Darüber hinaus sind auch Hanf, Baumwolle oder Koskosfasern geeignet, die anstehende Aufgabe zu übernehmen. Diese Materialen sind einfach zu bearbeiten und/oder ökologisch verträglich und (bis auf Kohlenstofffasern) sehr kostengünstig,.

Die Glasscheiben des Wärmedämmsystems sind üblicherweise gleich dick und aus dem gleichen Material hergestellt, um temperaturbedingte Spannungen zwischen den Scheiben zu vermeiden; vorgesehene Glassorten sind Quarzglas, Kalk-Natron-Glas, Floatglas, Bleikristallglas und Borsilikatglas.

Es kann es aber auch zweckmäßig sein, dass die Glasscheiben aus unterschiedlichen Materialien bestehen und/oder unterschiedlich dick sind.

Um architektonischen Anforderungen gerecht zu werden, können die Oberflächen der Glasscheiben zudem beliebig beschichtet sein; Emaille, keramische und andere für Glasbeschichtung geeignete Farben, Kunststofffolien, beschichtete Kunststofffolien , Metalle und metallbeschichtete Folien bieten sich hierfür besonders an.

Zweckmäßiger Weise enthält der Abstandshalter ein hygroskopisches Material, beispielsweise Kieselsäure, das Wasser, das in den Scheibenzwischenraum gelangt ist, aufnimmt. Damit wird nachhaltig ein Beschlagen der Scheiben von innen verhindert.

Die kraftschlüssige Verbindung des Abstandshalters mit den Glasscheiben erfolgt durch Verkleben, wobei die entstehenden Nähte anschließend mit einer Vergussmasse aus Silikon, Polyurethan oder einem anderen geeigneten, dauerelastischen, dichtenden Material vor Witterungseinflüssen geschützt werden.

Beim Einbau der Paneele werden die bekannten Techniken für Isolierglasscheiben wie Pfosten-Riegel-Konstruktionen angewandt.

Die Erfindung wird nachfolgend anhand eines Ausführungsbeispiels mit der zugehörigen Figur näher erläutert.

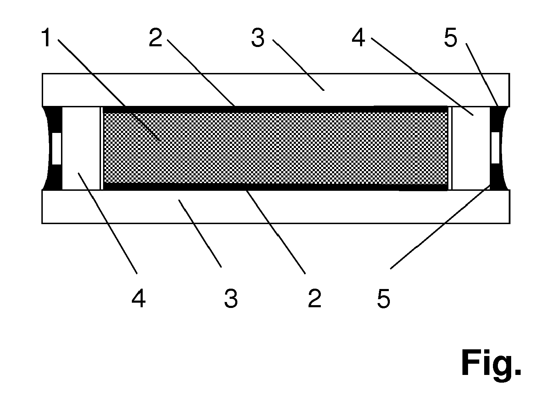

Die Figur zeigt das erfindungsgemäße Wärmedämmsystem in Schnittdarstellung. Das Vakuum-Isolationspaneel 1 liegt zwischen den zwei flächigen Glasfaservliesgeweben 2, die das Vakuum-Isolations-Paneel 1 von den Glasscheiben 3 mechanisch beabstanden und thermisch entkoppeln. Über die Abstandshalter 4, die mit den Glasscheiben 3 verklebt sind, werden die die Glasscheiben 3 auf Distanz gehalten und der Scheibenzwischenraum abgedichtet. Die Vergussmasse 5 schützt die beim Verkleben entstandenen Nähte vor Witterungseinflüssen.

### Liste der verwendeten Bezugszeichen

1 Vakuum-Isolations-Paneel
2 Glasfaservliesgewebe
3 Glasscheibe
4 Abstandshalter
5 Vergussmasse

## Patentansprüche

1. Wärmedämmsystem, vorzugsweise für Gebäude, bestehend aus zwei Glasscheiben (3), zwischen denen sich ein Vakuum-Isolations-Paneel (1) befindet, wobei die Glasscheiben (3) durch einen im Randbereich der Glasscheiben umlaufenden Abstandshalter (4) auf Distanz gehalten werden, der mit den Glasscheiben (3) kraftschlüssig verbunden ist, **dadurch gekennzeichnet, dass** zumindest eine der Glasscheiben (3) durch ein flächiges Gebilde, ausgeführt als Gewebe, Vliesgewebe, Vlies, Gewirk, Folie oder dergleichen, von dem Vakuum-Isolations-Paneel (1) mechanisch beabstandet und thermisch entkoppelt ist.

2. Wärmedämmsystem nach Anspruch 1, **dadurch gekennzeichnet, dass** wesentlicher Bestandteil des flächigen Gebildes Glasfasern oder Kohlefasern sind oder dieses Steinwolle beinhaltet.

3. Wärmedämmsystem nach Anspruch 1, **dadurch gekennzeichnet, dass** das flächige Gebildes Hanf, Baumwolle oder Kokosfasern beinhaltet.

4. Wärmedämmsystem nach einem der Ansprüche 1 bis 3, **dadurch gekennzeichnet, dass** die Glasscheiben (3) aus Quarzglas, Kalk-Natron-Glas, Floatglas, Bleikristallglas oder Borsilikatglas bestehen

5. Wärmedämmsystem nach einem der Ansprüche 1 bis 4, **dadurch gekennzeichnet, dass** die beiden Glasscheiben (3) aus unterschiedlichen Materialien bestehen.

6. Wärmedämmsystem nach einem der Ansprüche 1 bis 5, **dadurch gekennzeichnet, dass** die beiden Glasscheiben (3) unterschiedlich dick sind.

7. Wärmedämmsystem nach einem der Ansprüche 1 bis 6, **dadurch gekennzeichnet, dass** die dem Vakuum-Isolations-Paneel (1) zugewandte Seite zumindest einer der Glasscheiben (3) beschichtet ist.

8. Wärmedämmsystem nach Anspruch 7, **dadurch gekennzeichnet, dass** die Beschichtung aus keramischen Farben, Emaille, Kunststoff oder Metall besteht.

9. Wärmedämmsystem nach einem der Ansprüche 1 bis 8, **dadurch gekennzeichnet, dass** der Abstandshalter (4) ein hygroskopisches Material enthält.

10. Wärmedämmsystem nach einem der Ansprüche 1 bis 9, **dadurch gekennzeichnet, dass** der Abstandshalter (4) distal von einem dauerelastischen und dichtenden Material umschlossen ist.

## Geänderte Patentansprüche

### Geänderte Patentansprüche gemäss Regel 137(2) EPÜ.

**1.** Wärmedämmsystem, vorzugsweise für Gebäude, bestehend aus zwei Glasscheiben (3), zwischen denen sich ein Vakuum-Isolations-Paneel (1) befindet, wobei die Glasscheiben (3) durch einen im Randbereich der Glasscheiben umlaufenden Abstandshalter (4) auf Distanz gehalten werden, der mit den Glasscheiben (3) kraftschlüssig verbunden ist, **dadurch gekennzeichnet, dass** zumindest eine der Glasscheiben (3) durch ein flächiges Gebilde, ausgeführt als Gewebe, Vliesgewebe, Vlies, oder Gewirk, von dem Vakuum-Isolations-Paneel (1) mechanisch beabstandet und thermisch entkoppelt ist, wobei das flächige Gebilde Glasfasern oder Kohlefasern als wesentlichen Bestandteil beinhaltet.

**2.** Wärmedämmsystem nach Anspruch 1, **dadurch gekennzeichnet, dass** die Glasscheiben (3) aus Quarzglas, Kalk-Natron-Glas, Floatglas, Bleikristallglas oder Borsilikatglas bestehen

**3.** Wärmedämmsystem nach Anspruch 1 oder 2, **dadurch gekennzeichnet, dass** die beiden Glasscheiben (3) aus unterschiedlichen Materialien bestehen.

**4.** Wärmedämmsystem nach einem der Ansprüche 1 bis 3, **dadurch gekennzeichnet, dass** die beiden Glasscheiben (3) unterschiedlich dick sind.

**5.** Wärmedämmsystem nach einem der Ansprüche 1 bis 4, **dadurch gekennzeichnet, dass** die dem Vakuum-Isolations-Paneel (1) zugewandte Seite zumindest einer der Glasscheiben (3) beschichtet ist.

**6.** Wärmedämmsystem nach Anspruch 5, **dadurch gekennzeichnet, dass** die Beschichtung aus keramischen Farben, Emaille, Kunststoff oder Metall besteht.

**7.** Wärmedämmsystem nach einem der Ansprüche 1 bis 6, **dadurch gekennzeichnet, dass** der Abstandshalter (4) ein hygroskopisches Material enthält.

**8.** Wärmedämmsystem nach einem der Ansprüche 1 bis 7, **dadurch gekennzeichnet, dass** der Abstandshalter (4) distal von einem dauerelastischen und dichtenden Material umschlossen ist.
